# EUROPÄISCHE PATENTSCHRIFT

(11) **EP 4 201 182 B1**
(45) Veröffentlichungstag und Bekanntmachung des Hinweises auf die Patenterteilung: **02.09.2026**
(21) Anmeldenummer: 22199812.3
(22) Anmeldetag: 05.10.2022
(51) Int. Cl.: A01C 7/08, A01C 15/04

(54) **PNEUMATISCHE VERTEILMASCHINE MIT EINER MEHRZAHL AN FÖRDERLEITUNGEN ZUR ÜBERFÜHRUNG DES FLUIDISIERTEN VERTEILGUTSTROMS AN EINE MEHRZAHL AN VERTEILORGANEN**
PNEUMATIC DISTRIBUTION MACHINE WITH A PLURALITY OF CONVEYOR LINES FOR TRANSFERRING THE FLUIDISED DISTRIBUTION MATERIAL FLOW TO A PLURALITY OF DISTRIBUTION ELEMENTS
MACHINE DE DISTRIBUTION PNEUMATIQUE AVEC UNE PLURALITÉ DE CONDUITES DE TRANSPORT POUR TRANSFÉRER LE FLUX FLUIDISÉ D'UN PRODUIT À DISTRIBUER VERS UNE PLURALITÉ D'ORGANES DE DISTRIBUTION

(30) Priorität: 23.12.2021 DE 202021107061 U
(43) Veröffentlichungstag der Anmeldung: 28.06.2023
(73) Patentinhaber: RAUCH Landmaschinenfabrik GmbH, 77836 Rheinmünster (DE)
(72) Erfinder: STÖCKLIN, Volker, 77975 Ringsheim (DE); SCHENZ, Jonas, Fremersbergstrasse 1a (DE); MUCKENSTURM, Romain, 67310 Flexbourg (FR)
(74) Vertreter: Lichti - Patentanwälte Partnerschaft mbB

(56) Entgegenhaltungen:
- EP-A1- 0 214 404
- CA-A1- 2 111 611
- CA-A1- 2 461 771
- DE-A1- 3 425 963
- US-A1- 2021 221 626

## Beschreibung

Die Erfindung betrifft eine pneumatische Verteilmaschine zum Ausbringen von Verteilgut, umfassend
- wenigstens einen von einem Rahmen getragenen Vorratsbehälter mit wenigstens einer Auslauföffnung;
- wenigstens ein der Auslauföffnung des Vorratsbehälters nachgeordnetes Dosierorgan mit einer rotierbar angetriebenen Dosierwalze zur Dosierung des Verteilgutes;
- wenigstens eine dem Dosierorgan nachgeordnete Übergabekammer, welche einerseits mit wenigstens einem Gebläse in Verbindung steht und welche andererseits in je eine Förderleitung mündet, um einen fluidisierten Verteilgutstrom des von dem Dosierorgan dosierten Verteilgutes pneumatisch in Richtung je eines Verteilorgans zu fördern;
- je einen an dem der Übergabekammer abgewandten Ende einer jeweiligen Förderleitung angeordneten Krümmer zur Überführung des fluidisierten Verteilgutstroms an das jeweilige Verteilorgan; und
- je ein an dem freien Ende eines jeweiligen Krümmers einer jeweiligen Förderleitung unter seitlichem Abstand von der Längsachse der Verteilmaschine angeordnetes Verteilorgan, wobei eine jeweilige Förderleitung im Bereich ihres einem jeweiligen Krümmer zugewandten Endes an einem bodenseitigen Innenumfangsabschnitt wenigstens eine erste Umlenkeinrichtung aufweist, welche zur Umlenkung des fluidisierten Verteilgutstroms nach oben von dem bodenseitigen Innenumfangsabschnitt fort ausgebildet ist.

Pneumatische Verteilmaschinen sind insbesondere in Form von pneumatischen Düngerstreuern und/oder Sämaschinen zum Ausbringen von pulver- bzw. partikelförmigem Verteilgut, wie Dünger, Saatgut und dergleichen, in verschiedener Ausgestaltung bekannt und umfassen üblicherweise einen Vorratsbehälter zur Aufnahme des Verteilgutes, unterhalb dessen das oder die Dosierorgan(e) angeordnet ist bzw. sind. Während als Dosierorgane häufig auch mit einer Auslauföffnung des Vorratsbehälters zusammenwirkende, aktuatorisch oder manuell betätigte Dosierschieber zum Einsatz gelangen, weist das Dosierorgan bei den hier in Frage stehenden pneumatischen Verteilmaschinen in der Regel eine rotierbar angetriebene Dosierwalze auf, welche in Form einer Zellenradund/oder Nockenradwalze ausgestaltet sein kann. Die Dosierwalze ist in einem Dosiergehäuse gelagert, welches üblicherweise einen an seiner Oberseite angeordneten, mit einer Auslauföffnung des Vorratsbehälters in Verbindung stehenden Einlass und eine an seiner Unterseite angeordneten Auslass aufweist (vgl. z.B. die EP 2 786 649 B1).

Pneumatische Verteilmaschinen können einerseits in leichter Bauart als Anbaugeräte konzipiert sein, welche mit dem Dreipunkt einer Zugmaschine, wie eines Traktors, gekoppelt werden können, anderseits können sie in schwerer Bauart auf einen achsgestützten Nachläufer oder einen Selbstfahrer aufgesetzt sein. Sie umfassen üblicherweise seitlich nach außen ragende Ausleger, welche in unterschiedlichem Abstand voneinander endende Förderleitungen aufnehmen. Zur Förderung des Verteilgutes dient ein Gebläse, dessen Druckleitung sich an einen Auslass des Dosiergehäuses eines jeweiligen Dosierorgans anschließt und in einem Druckverteiler mündet, an welchen sich die Förderleitungen anschließen. Zwischen dem Druckverteiler und den Förderleitungen angeordnete Übergabekammern, welche zweckmäßigerweise mit jeweils eine Düse und einen Diffusor umfassenden Injektoren ausgestattet sein können, dienen zur Übergabe des Verteilgutes von der Dosierwalze des Dosierorgans an die Förderleitungen, um sicherzustellen, dass jeder Förderleitung die gewünschte Menge an Verteilgut aufgegeben wird. Das mittels der Gebläseluft fluidisierte Verteilgut wird schließlich pneumatisch über die nach außen umgelenkten Förderleitungen bis zu deren Ende gefördert, wo das Verteilgut an entsprechende Verteilorgane überführt wird. Dabei enden die Förderleitungen in je einem nach unten oder - in Fahrtrichtung der Verteilmaschine betrachtet - nach hinten weisenden Krümmer, an welchen sich die jeweiligen Verteilorgane anschließen. Letztere sind in der Regel von Prallkörpern gebildet, welche nach Art von Prallplatten bzw. Pralltellern ausgestaltet sein können und auf welche das in einer jeweiligen Förderleitung pneumatisch transportierte Verteilgut auftrifft und von dort im Wesentlichen fächerförmig auf dem Boden abgelegt wird. Die sich senkrecht zur Fahrtrichtung der pneumatischen Verteilmaschine erstreckende Breite eines jeweiligen Streufächers, welcher mittels eines jeweiligen Verteilorgans auf dem Boden abgelegt wird, ist im Rahmen der vorliegenden Offenbarung als "Verteilungsbreite" bezeichnet. Sie entspricht in der Regel etwa dem Doppelten des seitlichen Abstandes der Verteilorgane. Infolge der Überlappung der einzelnen Streufächer der einzelnen Verteilorgane quer zur Fahrtrichtung der pneumatischen Verteilmaschine wird eine gleichmäßige Querverteilung des Verteilgutes über die gesamte Arbeitsbreite erreicht.

Eine derartige pneumatische Verteilmaschine ist in Form eines pneumatischen Düngerstreuers beispielsweise aus der DE 10 2004 030 240 A1 bekannt. Die bekannte pneumatische Verteilmaschine weist dabei eine Mehrzahl an Dosierorganen auf, welche jeweils eine drehangetriebene Dosierwalze umfassen, an deren Dosiergehäuse sich auslassseitig wiederum mehrere, mittels Gebläse druckbeaufschlagte Übergabekammern anschließen, von welchen gruppenweise mehrere Förderleitungen abgehen, welche über Krümmer in je einem Verteilorgan münden. Eine Teilbreitenschaltung ist dadurch gewährleistet, dass jedem Dosierorgan ein eigener, unabhängig voneinander drehzahlgesteuerter Motor zum Antrieb seiner jeweiligen Dosierwalze zugeordnet ist, so dass nebeneinander angeordnete Verteilorgane, welche von den jeweiligen Gruppen an Förderleitungen mit Verteilgut versorgt sind, die von einem jeweiligen Dosierorgan ausgehen, gruppenweise zu- bzw. abgeschaltet werden können. Ferner lassen sich durch sukzessives Einschalten bzw. Ausschalten der Dosierorgane derart, dass zunächst die mit den äußeren Verteilorganen in Verbindung stehenden Dosierorgane eingeschaltet werden und sodann erst die weiter inneren bzw. dass zunächst die mit den inneren Verteilorganen in Verbindung stehenden Dosierorgane abgeschaltet werden und sodann erst die weiter äußeren, die zum pneumatischen Transport des Verteilgutes durch die verschieden langen Förderleitungen erforderlichen unterschiedlichen Transportzeiten kompensieren, so dass der Verteilvorgang am Anfang des Feldes gleichmäßig begonnen bzw. am Ende des Feldes gleichmäßig beendet werden kann. Darüber hinaus ist es durch Antrieb der Dosierwalzen der Dosierorgane mit unterschiedlichen Rotationsgeschwindigkeiten auch möglich, verschiedenen Feldbereichen mit unterschiedlichem Versorgungsbedarf an Verteilgut innerhalb der gesamten Arbeitsbreite Rechnung zu tragen oder bei der Kurvenfahrt andernfalls im Kurveninneren entstehende Überversorgungen bzw. im Kurvenäußeren entstehende Unterversorgungen zu kompensieren. Auf diese Weise lässt sich folglich eine Teilbreitenschaltung realisieren, indem die unabhängig voneinander drehangetrieben Dosierwalzen der Dosierorgane jeweils mit Gruppen von Verteilorganen kommunizieren. Weitere gattungsgemäße pneumatische Verteilmaschinen sind z.B. den EP 3 409 090 B1 und EP 3 629 694 B1 zu entnehmen.

In Bezug auf eine gleichmäßige Verteilung des Verteilgutes quer zur Fahrtrichtung der Verteilmaschine ist es von großer Bedeutung, dass einerseits die von einem jeweiligen Verteilorgan erzeugten Streufächer in möglichst spiegelsymmetrischer Form zu beiden Querseiten eines jeweiligen Verteilorgans hin abgeworfen werden, andererseits die Massenverteilung an Verteilgut zu beiden Seiten eines jeweiligen Verteilorgans möglichst spiegelsymmetrisch ist. In diesem Zusammenhang spielt einerseits die Geometrie der endständigen Krümmer einer jeweiligen Förderleitung eine Rolle, welche dazu dienen, eine jeweilige, sich quer zur Fahrtrichtung entlang von Auslegern erstreckende Förderleitung in Richtung eines jeweiligen Verteilorgans umzulenken. Während die Krümmer bei gezogenen, selbstfahrenden Verteilmaschinen mit einer zweckmäßigerweise vorhandenen Höhenverstellung der die Förderleitungen quer zur Fahrtrichtung tragenden Ausleger in der Regel etwa vertikal angeordnet sein können, um das Verteilgut um ca. 90° nach unten abzulenken und einem jeweiligen Verteilorgan zuzuführen, erweist sich bei von einem Dreipunkt-Kraftheber, wie z.B. eines Traktors, aufgenommenen Verteilmaschinen die Hubhöhe zum Anheben der Verteilmaschine häufig als begrenzt, weshalb die Umlenkung des Verteilgutes mittels der Krümmer am Ende einer jeweiligen Förderleitung auch etwa horizontal, insbesondere in Fahrtrichtung nach hinten, erfolgen kann. Ein zum gleichmäßigen Zuführen des Verteilgutes an ein jeweiliges Verteilorgan in besonderem Maße geeigneter, endständiger Krümmer der Förderleitung ist beispielsweise aus der EP 0 277 288 B1 bekannt.

Andererseits erweist sich in Bezug auf eine gleichmäßige Verteilung des Verteilgutes quer zur Fahrtrichtung der Verteilmaschine die Geometrie der Verteilorgane als entscheidend, welche üblicherweise in Form von Prallkörpern ausgestaltet sind und welche, vorzugsweise verstellbar, an dem freien Ende eines jeweiligen, am Ende einer jeweiligen Förderleitung angeordneten Krümmers montierbar sind. Beispiele von solchen Prallplatten, welche sich in der Praxis bewährt haben, sind beispielsweise aus der EP 3 409 090 B1 oder der EP 0 244 712 B1 bekannt, wobei die Prallplatten im letztgenannten Fall mit im Wesentlichen warzenförmigen Erhebungen versehen sind, welche sich gleichmäßig über die Reflexionsfläche der Prallplatte erstrecken und dazu dienen, mehr oder minder unabhängig von der Aufprallgeschwindigkeit der Verteilgutpartikel für eine gleichmäßigere, spiegelsymmetrische Querverteilung zu sorgen. Ein weiteres Verteilorgan in Form eines Prallkörpers, welches sich in jüngerer Zeit als besonders vorteilhaft hinsichtlich einer großen Verteilungsbreite sowie einer gleichmäßigen Querverteilung erwiesen hat, ist aus der zum Prioritätsdatum der vorliegenden Anmeldung noch nicht veröffentlichen DE 20 2021 101 157 U1 bekannt.

Als problematisch erweist sich indes der Umstand, dass aufgrund der teils erheblichen Länge der Förderleitungen die fluidisierten Verteilgutpartikel infolge Gravitation mit zunehmendem Förderweg nach unten absinken, so dass die Verteilgutpartikel am Ende einer jeweiligen Förderleitung bzw. am freien Ende eines jeweiligen Krümmers nicht mehr im Wesentlichen homogen über den Querschnitt der Förderleitung bzw. des Krümmers verteilt angeordnet sind, sondern sich ein von unten nach oben abnehmender Massengradient an Verteilgut einstellt, so dass die Verteilgutpartikel mit unterschiedlichen Massenanteilen auf unterschiedliche Bereiche des am freien Ende eines jeweiligen Krümmers montierten Prallkörpers auftreffen, wodurch die Querverteilung beeinträchtigt wird. Dieses Problem besteht umso mehr, als es durch die Geometrie und/oder die Anordnung der Prallkörper praktisch nicht kompensiert werden kann, da die Förderleitungen sehr unterschiedliche Längen besitzen (z.B. nur etwa einen oder wenige Meter, sofern sie die inneren Verteilorgane versorgen, bis hin zu 20 m oder mehr, sofern sie die äußeren Verteilorgane von großen Verteilmaschinen mit einer Arbeitsbreite von beispielsweise 36 m versorgen) und sich je nach Länge der Förderleitungen somit unterschiedliche Massengradienten an Verteilgut in den Endabschnitten der Förderleitungen bzw. in deren Krümmern einstellen.

Die DE 30 47 245 C1 beschreibt eine pneumatische Verteilmaschine mit an den Enden ihrer Förderleitungen montierten Krümmern und an deren freien Enden festgelegten Verteilorganen in Form von Prallkörpern. Im Bereich des freien Endes eines jeweiligen Krümmers ist neben der als eine Leitfläche dienenden Außenwandung des Krümmers eine zusätzliche Leitfläche montiert, welche sich mit radialer Erstreckungsrichtungskomponente schräg nach innen erstreckt, so dass das durch den Krümmer hindurch geförderte Verteilgut in zwei Teilströme aufgeteilt wird, bevor es auf das Verteilorgan auftrifft. Eine Kompensierung der vorstehend beschriebenen Problematik in Bezug auf die auf die Verteilgutpartikel wirkenden Gravitation, welche sich mit zunehmender Länge der Förderleitungen verstärkt, ist auf diese Weise allerdings nicht möglich.

Die EP 0 214 404 A1 beschreibt eine pneumatische Verteilmaschine gemäß dem Oberbegriff des Anspruchs 1, bei welcher eine jeweilige Förderleitung im Bereich ihres einem jeweiligen Krümmer zugewandten Endes eine Umlenkeinrichtung aufweist, welche zur Umlenkung des fluidisierten Verteilgutstroms nach oben von dem bodenseitigen Innenumfangsabschnitt der Förderleitung fort ausgebildet ist. Die bekannte Umlenkeinrichtung umfasst dabei stromauf des Krümmers in der Förderleitung in den fluidisierten Verteilgutstrom hineinragende Leitelemente mit Leitflächen auf, welche von unten zur Förderleitungsmitte verlaufen. Eine pneumatische Verteilmaschine mit einer ähnlichen Umlenkeinrichtung ihrer Förderleitungen ist der DE 34 25 963 A1 zu entnehmen.

Der Erfindung liegt die Aufgabe zugrunde, eine pneumatische Verteilmaschine der eingangs genannten Art auf einfache und kostengünstige Weise dahingehend weiterzubilden, dass unter zumindest weitestgehender Vermeidung der vorgenannten Nachteile eine gleichmäßige Verteilungsbreite des Verteilgutes mittels eines jeden Verteilorgans und somit eine gleichmäßige Querverteilung gewährleistet werden kann.

Erfindungsgemäß wird diese Aufgabe bei einer pneumatischen Verteilmaschine der eingangs genannten Art dadurch gelöst, dass eine jeweilige Förderleitung wenigstens eine zweite Umlenkeinrichtung aufweist, welche eine Mehrzahl an Innenumfangsvorsprüngen umfasst, welche sich unter Umfangsabstand voneinander um den bodenseitigen Innenumfangsabschnitt der Förderleitung erstrecken.

Die Erfindung sieht demnach vor, dass eine jeweilige Förderleitung wenigstens eine zweite Umlenkeinrichtung aufweist, welche eine Mehrzahl an Innenumfangsvorsprüngen umfasst, welche sich unter Umfangsabstand voneinander um den bodenseitigen Innenumfangsabschnitt der Förderleitung erstrecken. Die Innenumfangsvorsprünge vermögen den fluidisierten Verteilgutstrom jeweils lokal nach oben sowie auch zur Seite eines jeweiligen Innenumfangsvorsprungs - also im Wesentlichen in Umfangsrichtung der Förderleitung - umzulenken, so dass im bodenseitigen Abschnitt der Förderleitung angereicherte Verteilgutpartikel kollidieren und verwirbelt werden, was zu ihrer homogenen Verteilung über den gesamten Innenquerschnitt der Förderleitung beiträgt. Die erfindungsgemäße Umlenkeinrichtung stellt somit sicher, dass Verteilgutpartikel des fluidisierten Verteilgutstroms, welche sich infolge Gravitation - insbesondere mit zunehmender Länge der Förderleitung und folglich zunehmendem Förderweg - im bodenseitigen Bereich einer jeweiligen Förderleitung angereichert haben, stromauf des Krümmers nach oben von dem bodenseitigen Innenumfangsabschnitt der Förderleitung fort umgelenkt, d.h. mit einer radial nach oben gerichteten Bewegungsrichtungskomponente beaufschlagt werden, so dass sie wieder möglichst gleichmäßig über den gesamten Innenquerschnitt der Förderleitung verteilt werden, bevor sie durch den Krümmer hindurch an das an dessen freiem Ende montierte Verteilorgan gelangen. Handelt es sich bei letzterem insbesondere um einen Prallkörper, so treffen die Verteilgutpartikel folglich mit der vorgesehenen, über den gesamten Querschnitt des Krümmers im Wesentlichen gleichmäßigen Massenverteilung an Verteilgutpartikeln auf den Prallkörper auf, und zwar unabhängig von der Länge einer jeweiligen Förderleitung und folglich unabhängig von dem Ausmaß, in welchem sich die Verteilgutpartikel über den Förderweg in deren bodenseitigem Bereich akkumuliert haben. Ein jeder Prallkörper vermag auf diese Weise im Wesentlichen dieselbe Verteilungsbreite mit derselben Verteilungsbreite zu erzeugen, ohne dass es hierbei zu den Verteilungsungenauigkeiten im Stand der Technik kommt.

Die Innenumfangsvorsprünge der zweiten Umlenkeinrichtung können vorteilhafterweise einen Umfangsabstand zwischen etwa 3° und etwa 40°, insbesondere zwischen etwa 4° und etwa 32°, vorzugsweise zwischen etwa 5° und etwa 24°, wie beispielsweise zwischen etwa 6° und etwa 16°, besitzen. Alternativ oder zusätzlich können die Innenumfangsvorsprünge vorteilhafterweise eine radiale Erstreckung zwischen etwa 0,5 mm und etwa 5 mm, insbesondere zwischen etwa 1 mm und etwa 3 mm, wie beispielsweise zwischen etwa 1 mm und etwa 2 mm, aufweisen. Wiederum alternativ oder zusätzlich können die Innenumfangsvorsprünge mit Vorteil eine axiale Erstreckung zwischen etwa 1 mm und etwa 15 mm, insbesondere zwischen etwa 2 mm und etwa 10 mm, wie beispielsweise zwischen etwa 3 mm und etwa 9 mm, aufweisen.

Die Innenumfangsvorsprünge der zweiten Umlenkeinrichtung können darüber hinaus einen Querschnitt im Wesentlichen in Form eines Kreis- oder Ellipsenausschnittes besitzen. Sie können ferner z.B. im Wesentlichen sinus- oder sägezahnförmig um einen bodenseitigen Teilinnenumfang der Förderleitung angeordnet sein.

Die erfindungsgemäße erste und zweite Umlenkeinrichtung kann sich zweckmäßigerweise über einen bodenseitigen Innenumfangsabschnitt der Förderleitung von wenigstens etwa 90°, insbesondere von wenigstens etwa 120°, vorzugsweise von wenigstens 150°, höchst vorzugsweise von wenigstens 160°, erstrecken, wobei sie sich ferner zweckmäßigerweise über einen bodenseitigen Innenumfangsabschnitt der Förderleitung von höchstens etwa 200°, insbesondere von höchstens etwa 190°, vorzugsweise von höchstens 180°, wie beispielsweise im Bereich von etwa 160° bis etwa 175°, erstrecken kann. Die mittels der Umlenkeinrichtung nach oben umgelenkten Verteilgutpartikel kollidieren auf diese Weise auch mit Verteilgutpartikeln des fluidisierten Verteilgutstroms im mittleren oder oberen Innenquerschnittsniveau einer jeweiligen Förderleitung, welche von der Umlenkeinrichtung ansonsten nicht oder kaum beeinflusst werden, so dass eine sehr homogene Verteilung der Verteilgutpartikel über den gesamten Innenquerschnitt der Förderleitung in deren endständigem Bereich unmittelbar stromauf des Krümmers erzielt werden kann.

In vorteilhafter Ausgestaltung kann vorgesehen sein, dass eine jeweilige Förderleitung die erste Umlenkeinrichtung in Form einer Innenquerschnittsverjüngung aufweist, welche den fluidisierten Verteilgutstrom über die axiale Länge der Innenquerschnittsverjüngung hinweg nach oben umzulenken vermag.

Die Innenquerschnittsverjüngung der ersten Umlenkeinrichtung kann dabei vorzugsweise einen stetig differenzierbaren Abschnitt nach Art einer teilumfänglichen Rampe aufweisen oder im Wesentlichen gänzlich von einem solchen Abschnitt gebildet sein, so dass die Umlenkeinrichtung ähnlich einer Düse ausgestaltet sein kann, welche sich aber nicht um den gesamten Innenquerschnittsumfang, sondern lediglich um den bodenseitigen Innenumfangsabschnitt des Endes einer jeweiligen Förderleitung erstreckt.

Die Innenquerschnittsverjüngung der ersten Umlenkeinrichtung kann hierbei beispielsweise einen komplementär zu einem Kegelstumpfausschnitt ausgebildeten Abschnitt aufweisen oder im Wesentlichen gänzlich aus einem solchen kegelstumpfausschnittförmigen Abschnitt gebildet sein. Darüber hinaus kann sich die Innenquerschnittsverjüngung der ersten Umlenkreinrichtung zweckmäßigerweise über eine axiale Länge der Förderleitung zwischen etwa 5 mm und etwa 100 mm, insbesondere zwischen etwa 10 mm und etwa 75 mm, vorzugsweise zwischen etwa 15 mm und etwa 70 mm, höchst vorzugsweise zwischen etwa 20 mm und etwa 60 mm, wie beispielsweise zwischen etwa 25 mm und etwa 50 mm, erstrecken. Alternativ oder zusätzlich hat es sich als vorteilhaft erwiesen, wenn die Innenquerschnittsverjüngung der ersten Umlenkreinrichtung einen Neigungswinkel zwischen etwa 3° und etwa 25°, insbesondere zwischen etwa 4° und etwa 20°, vorzugsweise zwischen etwa 5° und etwa 15°, wie beispielsweise zwischen etwa 5° und etwa 10°, gegenüber der axialen Erstreckungsrichtung der Förderleitung bzw. gegenüber deren Mittelsenkrechten aufweist.

Gemäß einer besonders vorteilhaften Ausgestaltung kann vorgesehen sein, dass die Innenumfangsvorsprünge der zweiten Umlenkeinrichtung insbesondere an dem dem Krümmer zugewandten Ende der Innenquerschnittsverjüngung der ersten Umlenkeinrichtung angeordnet sind, d.h. die Innenumfangsvorsprünge der zweiten Umlenkeinrichtung befinden sich vorzugsweise an dem schmalsten Querschnitt der Innenquerschnittsverjüngung der ersten Umlenkeinrichtung unmittelbar stromauf des Krümmers.

In konstruktiver Hinsicht kann in vorteilhafter Ausgestaltung vorgesehen sein, dass die erste und zweite Umlenkeinrichtung an einem separaten Förderleitungsabschnitt angeordnet ist, welcher einerseits an dem einem jeweiligen Krümmer zugewandten Ende einer jeweiligen Förderleitung, andererseits an dem einer jeweiligen Förderleitung zugewandten Ende eines jeweiligen Krümmers befestigbar ist. Ein solcher separater Förderleitungsabschnitt, welcher mit der erfindungsgemäßen Umlenkeinrichtung versehen ist, kann einerseits einfach und kostengünstig in Serienfertigung hergestellt werden, andererseits ist auf diese Weise eine einfache Umrüstung herkömmlicher Förderleitungen gattungsgemäßer Verteilmaschinen möglich, indem der Endabschnitt einer jeweiligen Förderleitung gekappt und durch den separaten Förderleitungsabschnitt ersetzt wird.

Der separate Förderleitungsabschnitt kann beispielsweise nach Art einer Steckverbindung mit dem dem Krümmer zugewandten Ende einer jeweiligen Förderleitung und/oder mit dem einer jeweiligen Förderleitung zugewandten Ende eines jeweiligen Krümmers befestigbar sein, um für eine sowohl in konstruktiver als auch in handhabungstechnischer Hinsicht einfache, sichere sowie insbesondere im Wesentlichen gasdichte Verbindung des separaten Förderleitungsabschnittes mit dem Ende der restlichen Förderleitung zu sorgen. In diesem Zusammenhang kann der separate Förderleitungsabschnitt z.B. an seiner dem Krümmer abgewandten Seite der ersten und zweiten

Umlenkeinrichtung eine stufenförmige Innenquerschnittsverminderung aufweisen, welche als stirnseitiges Widerlager der in den separaten Förderleitungsabschnitt eingesteckten Förderleitung dient. Die stufenförmige Innenquerschnittsverminderung weist dabei zweckmäßigerweise eine radiale Erstreckung auf, welche im Wesentlichen der Wandstärke der Förderleitung entspricht, und erstreckt sich zweckmäßigerweise im Wesentlichen um den gesamten Umfang des Förderleitungsabschnittes.

Die Förderleitungen der Verteilmaschine können in als solcher bekannter Weise einen im Wesentlichen runden, insbesondere im Wesentlichen kreisrunden, Innenquerschnitt aufweisen, in welchem auch die wenigstens eine Umlenkeinrichtung ausgebildet ist, sei es in der eigentlichen Förderleitung oder sei es in dem separaten Förderleitungsabschnitt der vorbeschriebenen Art. Die Krümmer hingegen weisen vorzugsweise einen im Wesentlichen rechteckigen Innenquerschnitt auf, wobei der Krümmer insbesondere eine etwa aufrechte Außenwandung besitzen sollte, um den fluidisierten Verteilgutstrom um die Biegung des Krümmers herum zu leiten, ohne ihn in einem mehr oder minder diskreten Querschnittsbereich des Krümmers zu akkumulieren.

In weiterhin vorteilhafter Ausgestaltung kann in dem Krümmer wenigstens eine Trenneinrichtung angeordnet sein, welche den Innenquerschnitt des Krümmers in einen bodenseitigen Innenquerschnittsabschnitt und in einen oberseitigen Innenquerschnittsabschnitt unterteilt, so dass verhindert wird, dass sich in dem durch den Krümmer hindurch geleiteten fluidisierten Verteilgutstrom wiederum ein nennenswerter Massengradient an Verteilgut infolge Gravitation einstellt. Die Trenneinrichtung, welche beispielsweise als etwa ebene Trennwand, z.B. in Form eines Blechteils, ausgestaltet sein kann, kann insbesondere im Wesentlichen horizontal angeordnet sein, sofern der Krümmer den fluidisierten Verteilgutstrom - in Fahrtrichtung der Verteilmaschine betrachtet - nach hinten umlenkt, der Krümmer also im Wesentlichen "liegend" in einer Horizontalebene angeordnet ist. Sofern nur eine Trenneinrichtung vorgesehen ist, kann diese zweckmäßigerweise im mittleren Drittel des Innenquerschnitts des Krümmers, z.B. etwa in dessen Mitte, positioniert sein. Sofern zwei oder mehrere Trenneinrichtungen vorgesehen sind, können diese z.B. im Wesentlichen äquidistant voneinander angeordnet sein und den Innenquerschnitt des Krümmers somit etwa gleichmäßig unterteilen.

Die Trenneinrichtung des Krümmers erstreckt sich zweckmäßigerweise nicht unmittelbar bis zu dem mit der - ersten und/oder zweiten - Umlenkeinrichtung versehenen Ende der Förderleitung, um zu verhindern, dass von dort nach oben umgelenkte Verteilgutpartikel von unten gegen die Trenneinrichtung des Krümmers prallen, bevor sich eine gleichmäßige Verteilung der Verteilgutpartikel über den gesamten Innenquerschnitt der Förderleitung bzw. des Krümmers eingestellt hat. Stattdessen ist die Trenneinrichtung vorteilhafterweise mit Abstand von dem der Förderleitung zugewandten Ende des Krümmers angeordnet, wobei sich die Trenneinrichtung beispielsweise von dem freien Ende des Krümmers bis in denjenigen Krümmungsbereich des Krümmers hinein erstrecken kann, welcher im Wesentlichen der Projektion des Querschnittes des freien Endes des Krümmers entspricht. Darüber hinaus kann sich die Trenneinrichtung vorzugsweise im Wesentlichen bis zu dem freien Ende des Krümmers erstrecken, an welchen sich das Verteilorgan anschließt.

Wie bereits angedeutet, kann es sich bei dem an dem freien Ende eines jeweiligen Krümmers einer jeweiligen Förderleitung angeordneten Verteilorgan beispielsweise um einen, insbesondere verstellbar montierbaren, Prallkörper handeln, welcher grundsätzlich nach Art einer beliebigen herkömmlichen Prallplatte bzw. eines beliebigen herkömmlichen Pralltellers ausgestaltet sein kann oder insbesondere weitgehend entsprechend dem Prallkörper der eingangs zitierten DE 20 2021 101 157 U1 ausgestaltet sein kann, wie er weiter unten unter Bezugnahme auf die Fig. 12 bis 14 erläutert ist.

Weitere Merkmale und Vorteile der Erfindung ergeben sich aus der nachfolgenden Beschreibung eines Ausführungsbeispiels unter Bezugnahme auf die Zeichnungen. Dabei zeigen:
- Fig. 1:: eine schematische Frontansicht eines Ausführungsbeispiels einer pneumatischen Verteilmaschine;
- Fig. 2: eine schematische, abgebrochen wiedergegebene Draufsicht auf den rechten Ausleger der Verteilmaschine gemäß der Fig. 1, welcher eine Mehrzahl an Förderleitungen trägt, welche über je einen Krümmer in je ein Verteilorgan münden;
- Fig. 3: eine perspektivische Detailansicht eines Ab- schnittes des linken Auslegers der Verteilmaschine gemäß Fig. 1 und 2 einschließlich des endständigen Abschnittes einer der Förderleitungen, des sich hieran anschließenden Krümmers sowie des am freien Ende desselben montierten Verteilorgans in Form eines Prallkörpers;
- Fig. 4: eine perspektivische Detailansicht des Krümmers gemäß der Fig. 3 einschließlich des hieran montierten Verteilorgans und des in den Krümmer mündenden Endes der Förderleitung mit Umlenkeinrichtung;
- Fig. 5: eine Detailansicht entsprechend der Fig. 4 aus einer demgegenüber anderen Perspektive;
- Fig. 6: eine Querschnittsansicht des Krümmers einschließlich des hieran montierten Verteilorgans und des in den Krümmer mündenden Endes der Förderleitung mit Umlenkeinrichtung gemäß den Fig. 3 bis 5 auf Höhe einer Trenneinrichtung des Krümmers;
- Fig. 7: eine Seitenansicht des Krümmers einschließlich des hieran montierten Verteilorgans und des in den Krümmer mündenden Endes der Förderleitung mit Umlenkeinrichtung gemäß den Fig. 3 bis 6 in Erstreckungsrichtung der Förderleitung betrachtet;
- Fig. 8: eine perspektivische Ansicht des mit Umlenkeinrichtung versehenen Endes der Förderleitung gemäß den Fig. 3 bis 7, welches von einem separaten Förderleitungsabschnitt gebildet ist;
- Fig. 9: einen Längsschnitt durch den Förderleitungsabschnitt gemäß der Fig. 8;
- Fig. 10: einen Querschnitt durch den Förderleitungsabschnitt gemäß den Fig. 8 und 9;
- Fig. 11: eine schematische Explosionsdarstellung des Krümmers gemäß den Fig. 3 bis 7;
- Fig. 12: eine schematische Seitenansicht eines Ausführungsbeispiels eines Verteilorgans in Form eines Prallkörpers;
- Fig. 13: eine schematische perspektivische Ansicht des Prallkörpers gemäß der Fig. 9; und
- Fig. 14: eine schematische Frontansicht des Prallkörpers gemäß den Fig. 9 und 10.

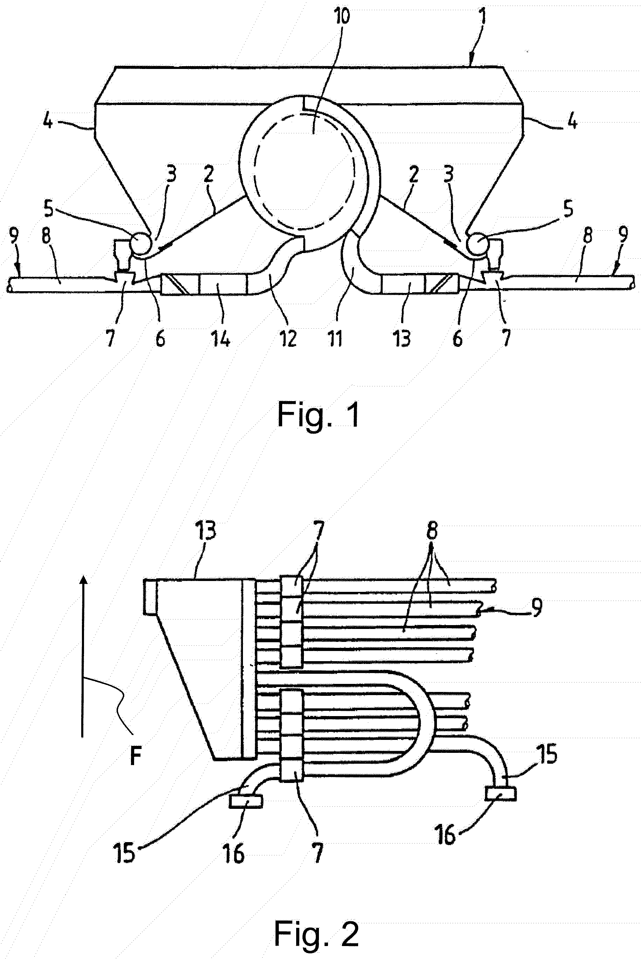

In der Fig. 1 ist eine Ausführungsform einer pneumatischen Verteilmaschine in stark schematisierter Weise wiedergegeben, wobei es sich bei der Verteilmaschine beispielsweise um einen pneumatischen Düngerstreuer handeln kann, welcher zum Verteilen von pulver- bzw. partikelförmigem Verteilgut in Form von Dünger dient. Die Verteilmaschine kann als Anbaugerät ausgestaltet sein, welche mit dem Dreipunkt-Kraftheber einer Zugmaschine, wie eines Traktors, gekoppelt werden kann, oder sie kann in schwerer Bauart auf einen achsgestützten Nachläufer oder einen Selbstfahrer aufgesetzt sein. Sie weist einen von einem zeichnerisch nicht dargestellten Rahmen getragenen Vorratsbehälter 1 auf, dessen Bodenflächen 2 und Seitenwände 4 im unteren Bereich einerseits zueinander, andererseits zu je Auslauföffnung 3 konvergieren. Einer jeweiligen Auslauföffnung 3 des Vorratsbehälters 1 ist ein Dosierorgan 5 zugeordnet, welches eine steuer- und/oder regelbar drehangetriebene Dosierwalze, z.B. in Form von Nockenrädern, umfasst und beispielsweise von Leitblechen 6 unterfangen sein kann. Unterhalb der Dosierorgane 5 befinden sich Übergabekammern 7, welche in je eine Förderleitung 8 münden. Letztere erstrecken sich in Form von Rohrbündeln 9 entlang von Auslegern quer zur Fahrtrichtung F der Verteilmaschine zu beiden Seiten deren Längsachse (vgl. auch die Fig. 2).

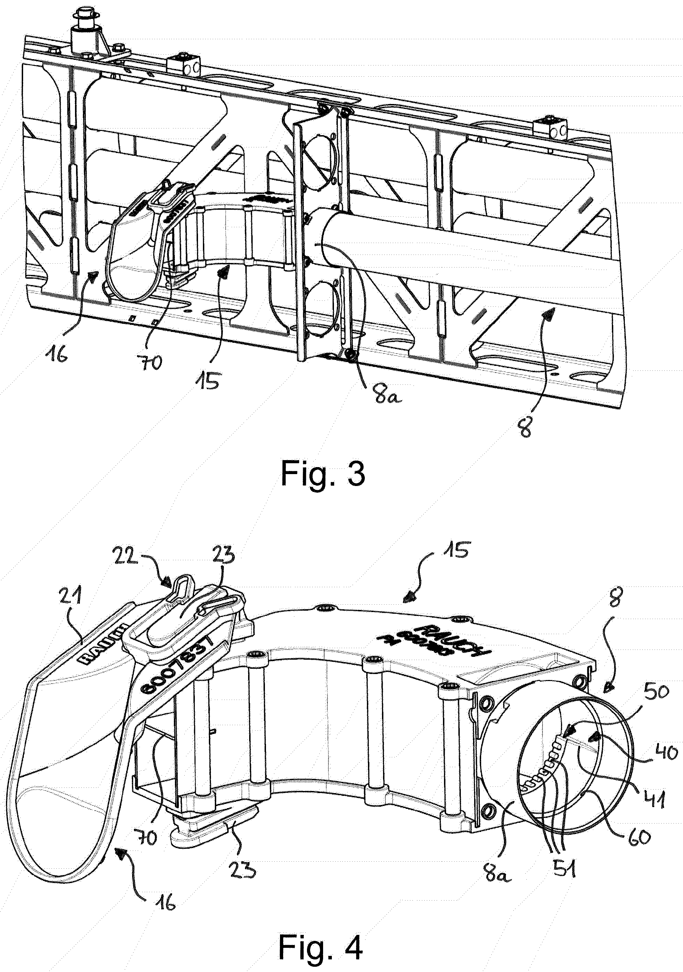

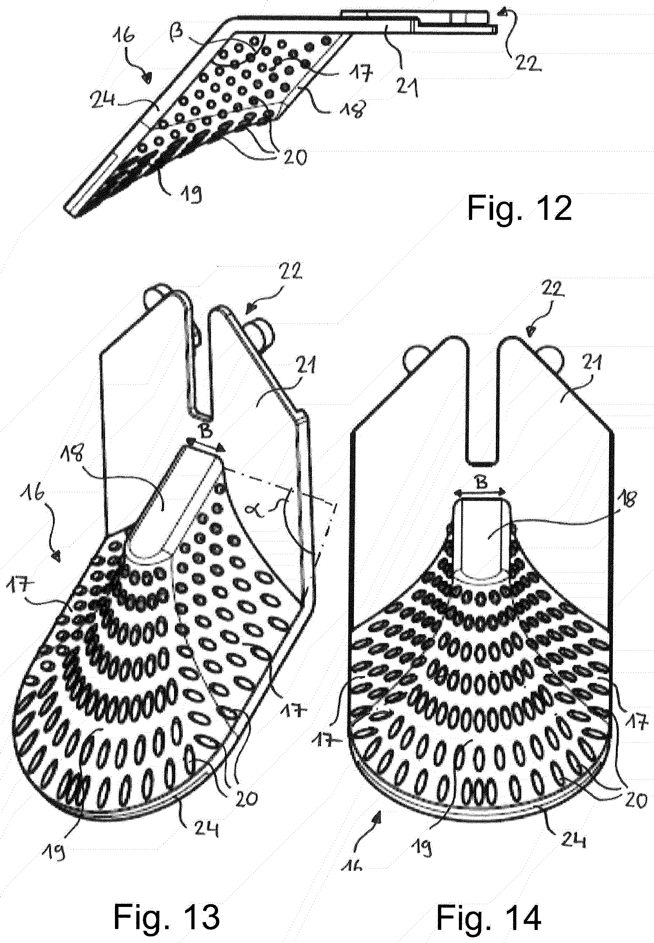

An der Frontseite des Vorratsbehälters 1 ist ein Gebläse 10 angeordnet, dessen druckseitigen Abgänge 11, 12 an je einen Verteilerkasten 13, 14 angeschlossen sind. Von dort wird die Druckluft auf die einzelnen Förderleitungen 8 aufgeteilt. Sie durchströmt die Übergabekammern 7, in welchen das Verteilgut dem Druckluftstrom zugeführt, beschleunigt und pneumatisch an weiter unten unter Bezugnahme auf die Fig. 3 bis 5 näher erläuterte Verteilorgane überführt wird. Die Übergabekammern 7 können in als solcher bekannten Weise mit einem Injektor nach Art einer Düse und einem diesem nachgeordneten Diffusor (nicht gezeigt) versehen sein. Wie insbesondere der Fig. 2 zu entnehmen ist, enden die Förderleitungen 8 in unterschiedlichem Abstand von der Längsachse der Verteilmaschine in Krümmern 15, welche nachfolgend unter Bezugnahme auf die Fig. 3 bis 7 und 11 näher erläutert sind, sich um einen Winkel von etwa 90° erstrecken und bei dem vorliegenden Ausführungsbeispiel - in Fahrtrichtung F der Verteilmaschine betrachtet - nach hinten weisen, d.h. sie sind "liegend" im Wesentlichen in einer horizontalen Ebene angeordnet. Unmittelbar stromab der Abgabeöffnung einer jeweiligen Förderleitung 8 - oder genauer: eines jeweiligen Krümmer 15 derselben - ist je ein Verteilorgan angeordnet, bei welchem es sich um einen insgesamt mit dem Bezugszeichen 16 versehenen Prallkörper handelt, welcher in der Fig. 2 lediglich durch ein Rechteck symbolisiert und von welchem in den Fig. 12 bis 14 ein Ausführungsbeispiel wiedergegeben ist.

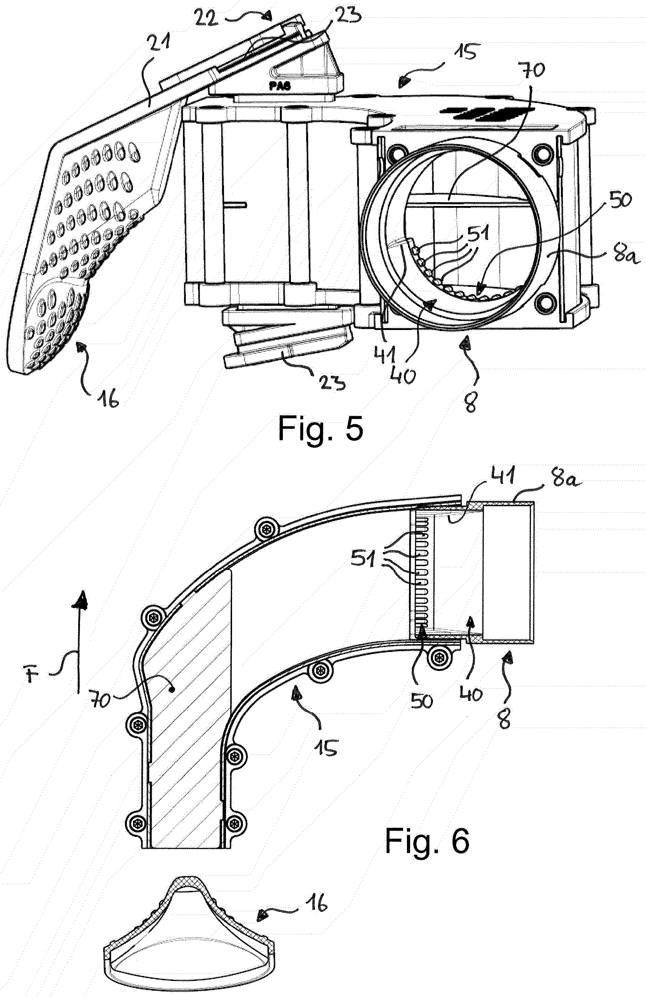

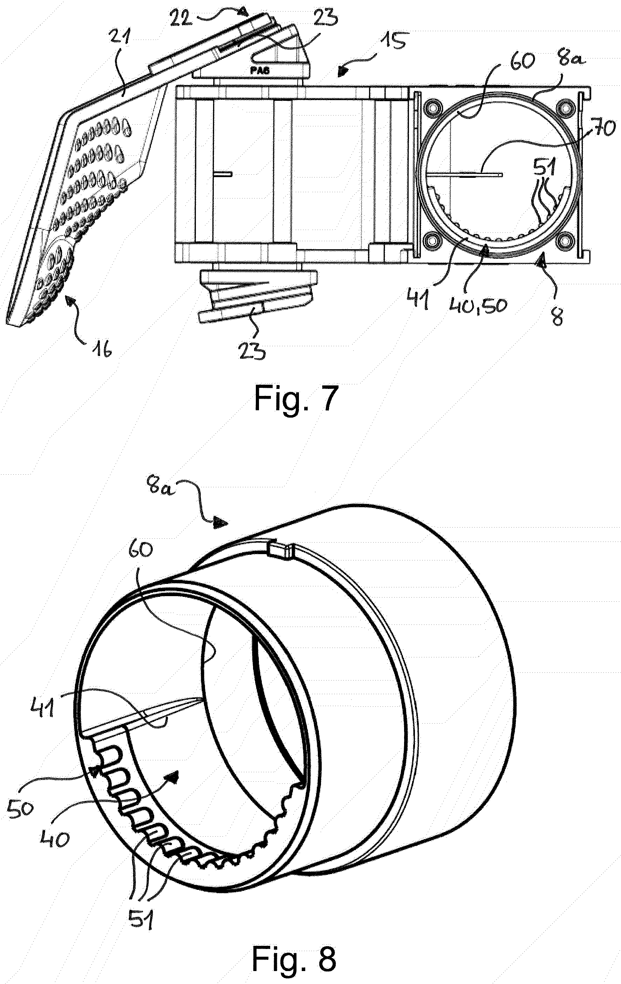

Während in der Fig. 3 eine perspektivische Detailansicht eines Abschnittes des linken Auslegers der Verteilmaschine gemäß den Fig. 1 und 2 einschließlich des endständigen Abschnittes einer der Förderleitungen 8, des sich hieran anschließenden Krümmers 15 sowie des am freien Ende desselben montierten Verteilorgans in Form eines Prallkörpers 16 schematisch wiedergegeben ist, zeigen die Fig. 4 bis 7 verschiedene Ansichten nur des Krümmers 15 einschließlich des hieran montierten Prallkörpers 16 und des in den Krümmer 15 mündenden Endes der Förderleitung 8 aus verschiedenen Perspektiven (Fig. 4, 5 und 7) sowie entlang einem im Wesentlichen horizontalen, zentralen Längsschnitt (Fig. 6). Wie insbesondere den Fig. 8 bis 10 zu entnehmen ist, ist bei dem vorliegenden Ausführungsbeispiel das dem Krümmer 15 zugewandte Ende der Förderleitung 8 von einem separaten Förderleitungsabschnitt 8a gebildet, welcher einerseits an dem dem Krümmer 15 zugewandten Ende der Förderleitung 8, andererseits an dem der Förderleitung 8 zugewandten Ende des Krümmers 15 befestigt ist und die Förderleitung 8 auf diese Weise mit dem Krümmer 15 verbindet.

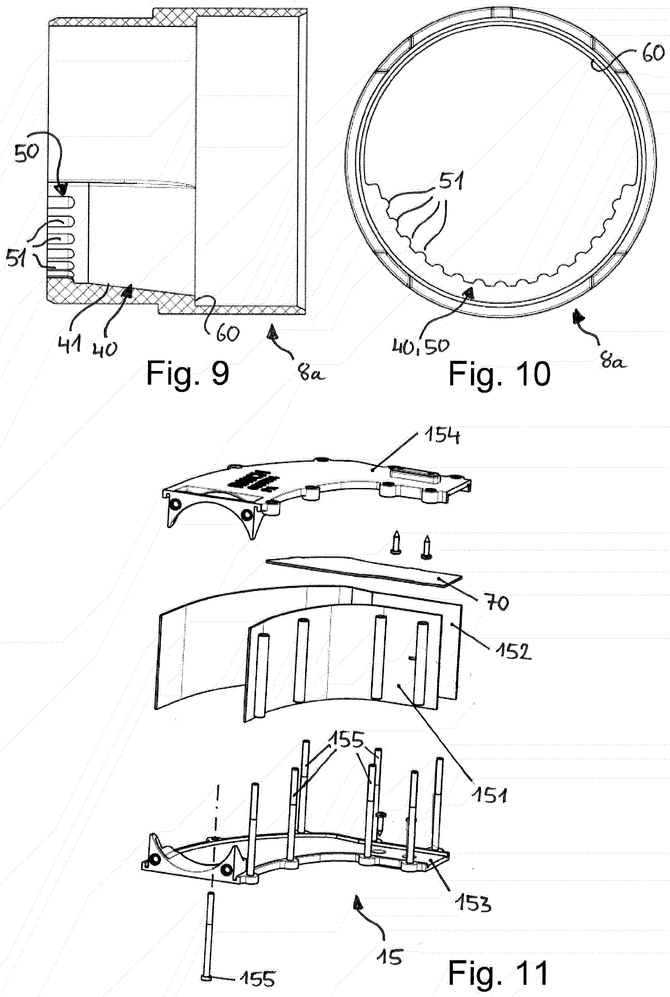

Wie aus den Fig. 4 bis 10 hervorgeht, weist die Förderleitung 8 - oder genauer: deren endständiger Förderleitungsabschnitt 8a - im Bereich des dem Krümmer 15 zugewandten Endes an einem bodenseitigen Innenumfangsabschnitt eine erste Umlenkeinrichtung 40 auf, welche zur Umlenkung des fluidisierten Verteilgutstroms nach oben von dem bodenseitigen Innenumfangsabschnitt fort ausgebildet ist und sich beispielsweise über einen bodenseitigen Innenumfangsabschnitt der Förderleitung 8 von etwa 175° erstreckt (vgl. insbesondere die Fig. 10), wohingegen der oberseitige Innenumfangsabschnitt des Förderleitungsabschnittes 8a ebenso wie jener der Förderleitung 8 rund, z.B. im Wesentlichen kreisrund, ausgestaltet ist. Die erste Umlenkrichtung 40 ist vornehmlich von einer Innenquerschnittsverjüngung 41 gebildet (vgl. insbesondere die Fig. 8 und 9), welche sich beispielsweise über eine axiale Länge des Förderleitungsabschnittes 8a von etwa 26 mm mit einem Neigungswinkel von etwa 7° gegenüber der axialen Erstreckungsrichtung der Förderleitung 8 bzw. gegenüber deren Mittelsenkrechten erstreckt. Die am bodenseitigen Innenumfangsabschnitt des Förderleitungsabschnittes 8a ausgebildete Innenquerschnittsverjüngung 41 der ersten Umlenkeinrichtung 40 besitzt im vorliegenden Fall eine stetig differenzierbare Ausgestaltung, welche im Querschnitt der Fig. 9 etwa geradlinig ist. Sie bildet somit eine teilumfängliche Rampe, welche eine zu einem Kegelstumpfausschnitt im Wesentlichen komplementäre Form aufweist, entlang welcher der fluidisierte Verteilgutstrom nach oben von dem bodenseitigen Innenumfangsabschnitt fort umgelenkt wird, so dass die Verteilgutpartikel in einem zumindest teilweise schräg nach oben gerichteten Verteilgutstrom in den Krümmer 15 eintreten, wobei etwaige Massengradienten an Verteilgut über den Querschnitt der Förderleitung 8 hinweg, welche sich infolge Gravitation über die Länge der Förderleitung 8 einstellen können, kompensiert werden.

Wie darüber hinaus insbesondere aus den Fig. 4 bis 10 ersichtlich, weist die Förderleitung 8 - oder genauer: deren endständiger Förderleitungsabschnitt 8a - im Bereich des dem Krümmer 15 zugewandten Endes an einem bodenseitigen Innenumfangsabschnitt ferner eine zweite Umlenkeinrichtung 50 auf, welche gleichfalls zur Umlenkung des fluidisierten Verteilgutstroms nach oben von dem bodenseitigen Innenumfangsabschnitt fort ausgebildet ist und sich beispielsweise über einen bodenseitigen Innenumfangsabschnitt der Förderleitung 8 von etwa 160° erstreckt (vgl. insbesondere die Fig. 10). Die zweite Umlenkrichtung 50, welche im vorliegenden Fall an dem dem Krümmer 15 zugewandten Ende der Innenquerschnittsverjüngung 41 der ersten Umlenkeinrichtung 40 - also unmittelbar stromab von letzterer - angeordnet ist, umfasst eine Mehrzahl an Innenumfangsvorsprüngen 51, welche sich unter einem Umfangsabstand von beispielsweise etwa 10° voneinander um den bodenseitigen Innenumfangsabschnitt des Förderleitungsabschnittes 8a herum erstrecken und im vorliegenden Fall eine radiale Höhe von etwa 1,5 mm sowie eine axiale Länge von etwa 7 mm besitzen. Die Innenumfangsvorsprünge 51 der zweiten Umlenkreinrichtung 50 weisen beispielsweise einen Querschnitt im Wesentlichen in Form eines Kreis- oder Ellipsenausschnittes auf (vgl. insbesondere die Fig. 10), können aber auch andersartig, z.B. im Wesentlichen sinusförmig oder dergleichen, ausgestaltet sein. Die Innenumfangsvorsprünge 51 der zweiten Umlenkeinrichtung 50 vermögen den fluidisierten Verteilgutstrom jeweils lokal nach oben sowie auch zur Seite eines jeweiligen Innenumfangsvorsprungs 51 - also im Wesentlichen in Umfangsrichtung der Förderleitung 8 - umzulenken, so dass im bodenseitigen Abschnitt des Förderleitungsabschnittes 8a angereicherte Verteilgutpartikel kollidieren und verwirbelt werden, was ebenfalls zu ihrer homogenen Verteilung über den gesamten Innenquerschnitt des Förderleitungsabschnittes 8a beiträgt.

Überdies ist insbesondere in den Fig. 4 bis 8 erkennbar, dass unmittelbar stromauf der Umlenkreinrichtungen 40, 50 - oder genauer: der Innenquerschnittsverjüngung 41 der stromauf gelegenen ersten Umlenkeinrichtung 40 - des Förderleitungsabschnittes 8a der Förderleitung 8 eine stufenförmige Innenquerschnittsverminderung 60 angeordnet ist, welche als stirnseitiges Widerlager bzw. als Anschlag der Förderleitung 8 dient, wenn deren Ende nach Art einer Steckverbindung in den Förderleitungsabschnitt 8a eingeführt worden ist. Die radiale Breite der stufenförmigen Innenquerschnittsverminderung 60 entspricht dabei etwa der Wandstärke der Förderleitung 8.

Wie aus den Fig. 3 bis 7 sowie am besten aus der Fig. 11 ersichtlich, besitzt der Krümmer 15 im Gegensatz zu der Förderleitung 8 einschließlich deren endständigem Förderleitungsabschnitt 8a einen im Wesentlichen rechteckigen Innenquerschnitt und umfasst z.B. eine gekrümmte innere Seitenwand 151, eine gekrümmte äußere Seitenwand 152, einen Boden 153 und einen Deckel 154, welche mittels einer Mehrzahl an Schrauben 155 miteinander verbunden sind (vgl. insbesondere die Fig. 11). In dem Krümmer 15 ist eine Trenneinrichtung 70 angeordnet, welche den Innenquerschnitt des Krümmers 15 in einen bodenseitigen Innenquerschnittsabschnitt und in einen oberseitigen Innenquerschnittsabschnitt unterteilt und z.B. von einer etwa ebenen Trennwand in Form eines im Wesentlichen horizontal angeordneten Blechs gebildet ist, um zu verhindern, dass sich in dem durch den Krümmer 15 hindurch geleiteten fluidisierten Verteilgutstrom wiederum ein nennenswerter Massengradient an Verteilgut infolge Gravitation einstellt. Die Trenneinrichtung 70 ist im vorliegenden Fall etwa in der Mitte des Innenquerschnittes des Krümmers 15 positioniert, wobei grundsätzlich auch zwei oder mehrere solcher Trenneinrichtungen 70 vorgesehen sein können, welche den Innenquerschnitt des Krümmers 15 mehrfach, insbesondere etwa gleichmäßig, unterteilen (nicht zeichnerisch dargestellt).

Die Trenneinrichtung 70 des Krümmers 15 erstreckt sich nicht unmittelbar bis zu dem mit den Umlenkeinrichtungen 40, 50 versehenen Ende des Förderleitungsabschnittes 8a der Förderleitung 8, so dass von dort nach oben umgelenkte Verteilgutpartikel nicht von unten gegen die Trenneinrichtung 70 auftreffen, bevor sich eine gleichmäßige Verteilung der Verteilgutpartikel über den gesamten Innenquerschnitt eingestellt hat (vgl. insbesondere die Fig. 6). Vielmehr ist die Trenneinrichtung 70 mit Abstand von dem der Förderleitung 8 zugewandten Ende des Krümmers 15 angeordnet, wobei sie sich im vorliegenden Fall von dem freien Ende des Krümmers 15 bis in denjenigen Krümmungsbereich des Krümmers 15 hinein erstreckt, welcher im Wesentlichen der Projektion des Querschnittes des (in der Fig. 6 unteren) freien Endes des Krümmers 15 entspricht.

Wie aus den Fig. 12 bis 14 hervorgeht, weist der Prallkörper 16 gemäß einer vorteilhaften Ausgestaltung an zwei entgegengesetzten Seiten desselben jeweils einen konkaven Reflexionsflächenabschnitt 17 auf, wobei die konkaven Reflexionsflächenabschnitte 17 z.B. spiegelsymmetrisch zueinander angeordnet sind und sowohl in entgegengesetzte Richtungen als auch von dem freien Ende einer jeweiligen Förderleitung 8 fort divergieren, d.h. die konkaven Reflexionsflächenabschnitte 16 erweitern sich jeweils konkav einerseits voneinander, andererseits von einem jeweiligen Krümmer 15 einer jeweiligen Förderleitung 8 fort. Zwischen den - in den Fig. 13 und 14 oberen - einander zugewandten Enden der konkaven Reflexionsflächenabschnitte 17 des Prallkörpers 16 befindet sich ein die beiden konkaven Reflexionsflächenabschnitte 16 miteinander verbindender Reflexionssteg 18, welcher eine mehr oder minder ebene bzw. planare Reflexionsfläche besitzt und dessen Breite B vorzugsweise kleiner ist als der Querschnitt des freien Endes des endständigen Krümmers 15 einer jeweiligen Förderleitung 8, wobei die Breite B des Reflexionssteges 18 beispielsweise etwa 15% bis etwa 20% des Querschnittes des endständigen Krümmers 15 der Förderleitung 8 betragen kann. Die konkaven Reflexionsflächenabschnitte 17 des Prallkörpers 16 erstrecken sich an ihren einander zugewandten Enden einerseits im Wesentlichen parallel zueinander, andererseits im Wesentlichen senkrecht von dem Reflexionssteg 18 fort, wobei sie infolge ihrer konkaven Krümmung zu beiden Seiten von dem Reflexionssteg 18 fort divergieren. Die konkave Krümmung der konkaven Reflexionsflächenabschnitte 17 kann sich hierbei z.B. über einen Winkel α zwischen etwa 60° und etwa 100° erstrecken (vgl. die Fig. 13), wobei sie einen im Wesentlichen konstanten Krümmungsradius aufweisen oder insbesondere einen sich nach außen von dem Reflexionssteg 18 fort vergrößernden Krümmungsradius besitzen kann, so dass sich eine im Wesentlichen parabelförmige Ausgestaltung der konkaven Reflexionsflächenabschnitte 17 ergibt.

An einer - in den Fig. 13 und 14 vorderen - Stirnseite des Prallkörpers 16 sind die beiden konkaven Reflexionsflächenabschnitte 17 über einen Halbringreflexionsflächenabschnitt 19 derart miteinander verbunden, dass der Halbringflächenreflexionsabschnitt 19 unter Vermeidung von Stufen oder Kanten, d.h. im mathematischen Sinne stetig und differenzierbar, in einen jeweiligen konkaven Reflexionsflächenabschnitt 17 übergeht. Der Halbringflächenreflexionsabschnitt 19 des Prallkörpers 16 divergiert dabei seinerseits von dem Reflexionssteg 18 bzw. von dem freien Ende einer jeweiligen Förderleitung 8 fort, wobei der Halbringreflexionsflächenabschnitt 19 des Prallkörpers 16 zumindest in seinem stirnseitigen, zentralen Bereich konvex gekrümmt ist. Die konvexe Krümmung des Halbringreflexionsflächenabschnittes 19 erstreckt sich hierbei vornehmlich parallel zu der konkaven Krümmung der beiden konkaven Reflexionsflächenabschnitte 17, d.h. die Höhe des Halbringreflexionsabschnittes 19 nimmt von seinem zentralen Bereich in Richtung seiner seitlichen Ränder (d.h. in Querrichtung, senkrecht zur Fahrtrichtung F der Verteilmaschine) in zunehmendem Maße ab, so dass sich eine konvexe Krümmung ergibt, wohingegen die Höhe der beiden konkaven Reflexionsflächenabschnitte 17 von ihrem dem Reflexionssteg 18 zugewandten Ende in Richtung der seitlichen Ränder (d.h. in Querrichtung, senkrecht zur Fahrtrichtung F der Verteilmaschine) in abnehmendem Maße abnimmt, so dass sich eine konkave Krümmung ergibt. Die aus den beiden konkaven Reflexionsflächenabschnitten 17, der ebenen Reflexionsfläche des Reflexionssteges 18 und dem Halbringflächenreflexionsabschnitt 19 gebildete Gesamtreflexionsfläche des Prallkörpers 16 ähnelt somit etwa einem Schuh, welcher im Bereich des Innen- und Außenristes die konkaven Reflexionsflächenabschnitte 17 und im Bereich des Spanns und der Kappe den, insbesondere konvexen, Halbringreflexionsflächenabschnitt 19 umfasst, während die Einstiegsöffnung von der ebenen Reflexionsfläche des Reflexionssteges 18 gebildet ist. Sowohl die konkaven Reflexionsflächenabschnitte 17 als auch der Halbringreflexionsflächenabschnitt 19 des Prallkörpers 16 sind bei dem vorliegenden Ausführungsbeispiel überdies mit einer Mehrzahl an warzenförmigen, im Wesentlichen gleichmäßig verteilten Erhebungen 20 ausgestattet, welche eine etwa längliche bzw. ovale Gestalt besitzen, aber beispielsweise auch etwa tropfenförmig ausgestaltet sein können (nicht gezeigt). Die warzenförmigen Erhebungen 20 können dabei mit unterschiedlichen Grundflächen und/oder Höhen vorgesehen sein und insbesondere im Wesentlichen jenen der eingangs zitierten EP 0 244 712 B1 entsprechen.

Der Prallkörper 16 weist ferner eine Montageplatte 21 auf, an welcher die Schmalseiten der konkaven Reflexionsflächenabschnitte 17 und des Reflexionssteges 18 festgelegt sind. An ihrem den konkaven Reflexionsabschnitten 17 abgewandten, in den Fig. 12 bis 14 oberen, freien Ende ist die Montageplatte 21 mit einer Befestigungseinrichtung 22 versehen, welche zur lösbaren Befestigung des Prallkörpers 16 an dem freien Ende des endständigen Krümmers 15 einer jeweiligen Förderleitung 8 der Verteilmaschine dient. Während die Befestigungseinrichtung 16 grundsätzlich in beliebiger bekannter Weise ausgestaltet sein kann, umfasst sie im vorliegenden Fall einerseits einen zentralen Schlitz, welcher in einen hierzu komplementären Führungs- und Befestigungsvorsprung 23 eines Befestigungsmittels des Krümmers 15 der Förderleitung 8 einführbar ist (vgl. hierzu auch die Fig. 4, 5 und 7), andererseits zwei, z.B. federbelastete Klemmbacken, welche zur einfachen und vorzugsweise werkzeugfreien, kraftschlüssig klemmenden Montage des Prallkörpers 16 an dem Befestigungsmittel des Krümmers 15 der Förderleitung 8 dienen. Die konkaven Reflexionsflächenabschnitte 17 und der Halbringreflexionsflächenabschnitt 19 des Prallkörpers 16 können ferner auf einer Grundplatte 24 festgelegt sein, welche insbesondere unter einem Winkel β größer etwa 90° und kleiner etwa 150°, im vorliegenden Fall z.B. unter einem Winkel β von etwa 130°, in Bezug auf die Grundplatte 24 angeordnet ist (vgl. insbesondere die Fig. 12).

Wie sich wiederum aus den Fig. 4, 5 und 7 ergibt, kann der Prallkörper 16 mittels der Befestigungseinrichtung 22 seiner Montageplatte 21 an den entsprechenden Führungs- und Befestigungsvorsprüngen 23 an dem freien Ende des endständigen Krümmers 15 einer jeweiligen Förderleitung 8 lösbar montiert werden, wobei sich der Krümmer 15 der Förderleitung 8 im vorliegenden Fall um einen Winkel von etwa 90° entgegen der Fahrtrichtung F der Verteilmaschine erstreckt. Im Falle der in den Fig. 4, 5 und 7 wiedergegebenen Situation ist der Prallkörper 16 an einem oberen Führungs- und Befestigungsvorsprung 23 des Krümmers 15 montiert worden, welcher z.B. unter einem Winkel von etwa 30° in Bezug auf die Horizontale geneigt angeordnet ist. Dies erweist sich insbesondere für die Normal- oder Frühdüngung als zweckmäßig, wobei die aus dem freien Ende des Krümmers 15 austretenden Verteilgutpartikel nach hinten (d.h. entgegen der Fahrtrichtung F) mittels des Prallkörpers 16 schräg nach unten reflektiert werden. Wie ebenfalls insbesondere den Fig. 4, 5 und 7 zu entnehmen ist, besitzt der Krümmer 15 ferner einen unteren Führungs- und Befestigungsvorsprung 23 zur lösbaren Befestigung des Prallkörpers 16, welcher z.B. im Wesentlichen horizontal oder unter einem kleineren Winkel als der obere Führungs- und Befestigungsvorsprung 23 an dem Krümmer 15 angeordnet ist, so dass ein an dem unteren Führungs- und Befestigungsvorsprung 23 des Krümmers montierter Prallkörper 16 (nicht gezeigt) unter einem flacheren Winkel gegen den endständigen Querschnitt des Krümmers 15 angestellt ist als dies bei den Fig. 4, 5 und 7 der Fall ist. Dies erweist sich insbesondere für die Spätdüngung als zweckmäßig, bei welcher die angebauten Pflanzen bereits stark angewachsen sein können, wobei die aus dem freien Ende des Krümmers 15 der Förderleitung 8 nach hinten (d.h. entgegen der Fahrtrichtung F) austretenden Verteilgutpartikel mittels des Prallkörpers 16 schräg nach oben reflektiert werden.

## Patentansprüche

1. Pneumatische Verteilmaschine zum Ausbringen von Verteilgut, umfassend
- wenigstens einen von einem Rahmen getragenen Vorratsbehälter (1) mit wenigstens einer Auslauföffnung (3);
- wenigstens ein der Auslauföffnung (3) des Vorratsbehälters (1) nachgeordnetes Dosierorgan (5) mit einer rotierbar angetriebenen Dosierwalze zur Dosierung des Verteilgutes;
- wenigstens eine dem Dosierorgan (3) nachgeordnete Übergabekammer (7), welche einerseits mit wenigstens einem Gebläse (10) in Verbindung steht und welche andererseits in je eine Förderleitung (8) mündet, um einen fluidisierten Verteilgutstrom des von dem Dosierorgan (5) dosierten Verteilgutes pneumatisch in Richtung je eines Verteilorgans zu fördern;
- je einen an dem der Übergabekammer (7) abgewandten Ende einer jeweiligen Förderleitung (8) angeordneten Krümmer (15) zur Überführung des fluidisierten Verteilgutstroms an das jeweilige Verteilorgan; und
- je ein an dem freien Ende eines jeweiligen Krümmers (15) einer jeweiligen Förderleitung (8) unter seitlichem Abstand von der Längsachse der Verteilmaschine angeordnetes Verteilorgan,
wobei eine jeweilige Förderleitung (8) im Bereich ihres einem jeweiligen Krümmer (15) zugewandten Endes an einem bodenseitigen Innenumfangsabschnitt wenigstens eine erste Umlenkeinrichtung (40) aufweist, welche zur Umlenkung des fluidisierten Verteilgutstroms nach oben von dem bodenseitigen Innenumfangsabschnitt fort ausgebildet ist, **dadurch gekennzeichnet, dass** eine jeweilige Förderleitung (8) wenigstens eine zweite Umlenkeinrichtung (50) aufweist, welche eine Mehrzahl an Innenumfangsvorsprüngen (51) umfasst, welche sich unter Umfangsabstand voneinander um den bodenseitigen Innenumfangsabschnitt der Förderleitung (8) erstrecken.

2. Verteilmaschine nach Anspruch 1, **dadurch gekennzeichnet, dass** die Innenumfangsvorsprünge (51) der zweiten Umlenkrichtung (50)
- einen Umfangsabstand zwischen 3° und 40°, insbesondere zwischen 4° und 32°, und/oder
- eine radiale Erstreckung zwischen 0,5 mm und 5 mm, insbesondere zwischen 1 mm und 3 mm, und/oder
- eine axiale Erstreckung zwischen 1 mm und 15 mm, insbesondere zwischen 2 mm und 10 mm, aufweisen.

3. Verteilmaschine nach Anspruch 1 oder 2, **dadurch gekennzeichnet, dass** die Innenumfangsvorsprünge (51) der zweiten Umlenkeinrichtung (50) einen Querschnitt im Wesentlichen in Form eines Kreis- oder Ellipsenausschnittes besitzen.

4. Verteilmaschine nach einem der Ansprüche 1 bis 3, **dadurch gekennzeichnet, dass** sich die erste und zweite Umlenkeinrichtung (40, 50) über einen bodenseitigen Innenumfangsabschnitt der Förderleitung (8)
- von wenigstens 90°, insbesondere von wenigstens 120°, vorzugsweise von wenigstens 150°, und/oder
- von höchstens 200°, insbesondere von höchstens 190°, vorzugsweise von höchstens 180°,
erstreckt.

5. Verteilmaschine nach einem der Ansprüche 1 bis 4, **dadurch gekennzeichnet, dass** eine jeweilige Förderleitung (8) die erste Umlenkeinrichtung (40) in Form einer Innenquerschnittsverjüngung (41) aufweist.

6. Verteilmaschine nach Anspruch 5, **dadurch gekennzeichnet, dass** die Innenquerschnittsverjüngung (41) der ersten Umlenkeinrichtung (40) einen stetig differenzierbaren Abschnitt nach Art einer teilumfänglichen Rampe aufweist oder im Wesentlichen gänzlich von einem solchen gebildet ist.

7. Verteilmaschine nach Anspruch 5 oder 6, **dadurch gekennzeichnet, dass** die Innenquerschnittsverjüngung (41) der ersten Umlenkeinrichtung (40) einen komplementär zu einem Kegelstumpfausschnitt ausgebildeten Abschnitt aufweist oder im Wesentlichen gänzlich aus einem solchen gebildet ist, wobei die Innenquerschnittsverjüngung (41) der ersten Umlenkreinrichtung (40) insbesondere
- sich über eine axiale Länge der Förderleitung (8) zwischen 5 mm und 100 mm, insbesondere zwischen 10 mm und 75 mm, erstreckt und/oder
- einen Neigungswinkel zwischen 3° und 25°, insbesondere zwischen 4° und 20°, gegenüber der axialen Erstreckungsrichtung der Förderleitung (8) aufweist.

8. Verteilmaschine nach einem der Ansprüche 1 bis 7, **dadurch gekennzeichnet, dass** die Innenumfangsvorsprünge (51) der zweiten Umlenkeinrichtung (50) insbesondere an dem dem Krümmer (15) zugewandten Ende der Innenquerschnittsverjüngung (41) der ersten Umlenkeinrichtung (40) angeordnet sind.

9. Verteilmaschine nach einem der Ansprüche 1 bis 8, **dadurch gekennzeichnet, dass** die erste und zweite Umlenkeinrichtung (40, 50) an einem separaten Förderleitungsabschnitt (8a) angeordnet ist, welcher einerseits an dem einem jeweiligen Krümmer (15) zugewandten Ende einer jeweiligen Förderleitung (8), andererseits an dem einer jeweiligen Förderleitung (8) zugewandten Ende eines jeweiligen Krümmers (15) befestigbar ist.

10. Verteilmaschine nach Anspruch 9, **dadurch gekennzeichnet, dass** der separate Förderleitungsabschnitt (8a) nach Art einer Steckverbindung mit dem dem Krümmer (15) zugewandten Ende einer jeweiligen Förderleitung (8) und/oder mit dem einer jeweiligen Förderleitung (8) zugewandten Ende eines jeweiligen Krümmers (15) befestigbar ist, wobei der separate Förderleitungsabschnitt (8a) insbesondere an seiner dem Krümmer (15) abgewandten Seite der ersten und zweiten Umlenkeinrichtung (40, 50) eine stufenförmige Innenquerschnittsverminderung (60) aufweist, welche als stirnseitiges Widerlager der in den separaten Förderleitungsabschnitt (8a) eingesteckten Förderleitung (8) dient.

11. Verteilmaschine nach einem der Ansprüche 1 bis 10, **dadurch gekennzeichnet, dass**
- eine jeweilige Förderleitung (8) und gegebenenfalls der separate Förderleitungsabschnitt (8a) einen im Wesentlichen runden, insbesondere im Wesentlichen kreisrunden, und/oder
- ein jeweiliger Krümmer (15) einen im Wesentlichen rechteckigen
Innenquerschnitt aufweist.

12. Verteilmaschine nach einem der Ansprüche 1 bis 11, **dadurch gekennzeichnet, dass** in dem Krümmer (15) wenigstens eine Trenneinrichtung (70) angeordnet ist, welche den Innenquerschnitt des Krümmers (15) in einen bodenseitigen Innenquerschnittsabschnitt und in einen oberseitigen Innenquerschnittsabschnitt unterteilt, wobei die Trenneinrichtung (70) insbesondere im Wesentlichen horizontal angeordnet ist.

13. Verteilmaschine nach Anspruch 12, **dadurch gekennzeichnet, dass** die Trenneinrichtung (70) des Krümmers (15)
- mit Abstand von dem der Förderleitung (8) zugewandten Ende des Krümmers (15) angeordnet ist und/oder
- sich im Wesentlichen bis zu dem freien Ende des Krümmers (15) erstreckt.

14. Verteilmaschine nach einem der Ansprüche 1 bis 13, **dadurch gekennzeichnet, dass** es sich bei dem an dem freien Ende eines jeweiligen Krümmers (15) einer jeweiligen Förderleitung (8) angeordneten Verteilorgan um einen, insbesondere verstellbar montierbaren, Prallkörper (16) handelt.

## Claims

1. Pneumatic distribution machine for distributing distribution material, comprising
- at least one storage container (1) which is supported by a frame and has at least one outlet opening (3);
- at least one metering element (5) which is arranged downstream of the outlet opening (3) of the storage container (1) and has a rotatably driven metering roller for metering the distribution material;
- at least one transfer chamber (7) arranged downstream of the metering element (3), which chamber is connected to at least one blower (10) on the one hand and which leads into a conveying line (8) on the other hand, in order to pneumatically convey a fluidized distribution material flow of the distribution material metered by the metering element (5) towards each of the distribution elements;
- a bend (15) each arranged at the end of a respective conveying line (8) that faces away from the transfer chamber (7) for transferring the fluidized distribution material flow to the respective distribution element; and
- a distribution element each arranged at the free end of a respective bend (15) of a respective conveying line (8) at a lateral distance from the longitudinal axis of the distribution machine,
a respective conveying line (8) having at least one first deflection device (40) in the region of its end that faces a respective bend (15) on a bottom-side inner circumferential section, which device is designed to deflect the fluidized distribution material flow upwards from the bottom-side inner circumferential section, **characterized in that** a respective conveying line (8) has at least one second deflection device (50) which comprises a plurality of inner circumferential projections (51) which extend at a circumferential distance from each other around the bottom-side inner circumferential section of the conveying line (8).

2. Distribution machine according to claim 1, **characterized in that** the inner circumferential projections (51) of the second deflection device (50) have
- a circumferential distance between 3° and 40°, in particular between 4° and 32°, and/or
- a radial extent between 0.5 mm and 5 mm, in particular between 1 mm and 3 mm, and/or
- an axial extent between 1 mm and 15 mm, in particular between 2 mm and 10 mm.

3. Distribution machine according to claim 1 or 2, **characterized in that** the inner circumferential projections (51) of the second deflection device (50) have a cross-section substantially in the form of a circular or elliptical cutout.

4. Distribution machine according to any of claims 1 to 3,
**characterized in that** the first and second deflection device (40, 50) extends over a bottom-side inner circumferential section of the conveying line (8)
- of at least 90°, in particular of at least 120°, preferably of at least 150°, and/or
- of at most 200°, in particular of at most 190°, preferably of at most 180°.

5. Distribution machine according to any of claims 1 to 4,
**characterized in that** a respective conveying line (8) has the first deflection device (40) in the form of an inner cross-sectional tapering (41).

6. Distribution machine according to claim 5, **characterized in that** the inner cross-sectional tapering (41) of the first deflection device (40) has a continuously differentiable section in the manner of a partially circumferential ramp or is formed substantially entirely by such a section.

7. Distribution machine according to claim 5 or 6, **characterized in that** the inner cross-sectional tapering (41) of the first deflection device (40) has a section formed complementarily to a truncated cone cutout or is formed substantially entirely from such a section, the inner cross-sectional tapering (41) of the first deflection device (40) in particular
- extending over an axial length of the conveying line (8) between 5 mm and 100 mm, in particular between 10 mm and 75 mm, and/or
- having an angle of inclination between 3° and 25°, in particular between 4° and 20°, relative to the axial extension direction of the conveying line (8).

8. Distribution machine according to any of claims 1 to 7,
**characterized in that** the inner circumferential projections (51) of the second deflection device (50) are arranged in particular at the end of the inner cross-sectional tapering (41) of the first deflection device (40) that faces the bend (15).

9. Distribution machine according to any of claims 1 to 8,
**characterized in that** the first and second deflection device (40, 50) is arranged on a separate conveying line section (8a), which can be attached to the end of a respective conveying line (8) that faces a respective bend (15), and to the end of a respective bend (15) that faces a respective conveying line (8).

10. Distribution machine according to claim 9, **characterized in that** the separate conveying line section (8a) can be attached, in the manner of a plug connection, to the end of a respective conveying line (8) that faces the bend (15) and/or to the end of a respective bend (15) that faces a respective conveying line (8), the separate conveying line section (8a) having, in particular on its side of the first and second deflection device (40, 50) that faces away from the bend (15), a stepped inner cross-sectional reduction (60), which serves as an end-face abutment of the conveying line (8) inserted into the separate conveying line section (8a).

11. Distribution machine according to any of claims 1 to 10,
**characterized in that**
- a respective conveying line (8) and, where applicable, the separate conveying line section (8a), has a substantially round, in particular substantially circular, inner cross-section, and/or
- a respective bend (15) has a substantially rectangular inner cross-section.

12. Distribution machine according to any of claims 1 to 11,
**characterized in that**, in the bend (15), at least one separating device (70) is arranged which divides the inner cross-section of the bend (15) into a bottom-side inner cross-sectional section and an upper-side inner cross-sectional section, the separating device (70) being arranged in particular substantially horizontally.

13. Distribution machine according to claim 12, **characterized in that** the separating device (70) of the bend (15)
- is arranged at a distance from the end of the bend (15) that faces the conveying line (8) and/or
- extends substantially to the free end of the bend (15).

14. Distribution machine according to any of claims 1 to 13,
**characterized in that** the distribution element arranged at the free end of a respective bend (15) of a respective conveying line (8) is a baffle body (16), which in particular can be mounted in an adjustable manner.

## Revendications

1. Machine d'épandage pneumatique pour la distribution d'un matériau d'épandage, comprenant
- au moins un réservoir de réserve (1) supporté par un cadre et comportant au moins une ouverture de sortie (3) ;
- au moins un organe de dosage (5) disposé en aval de l'ouverture de sortie (3) du réservoir de réserve (1) et comportant un rouleau de dosage entraîné en rotation pour le dosage du matériau d'épandage ;
- au moins une chambre de transfert (7) disposée en aval de l'organe de dosage (3), laquelle est, d'une part, en liaison avec au moins une soufflante (10) et, d'autre part, débouche dans respectivement une conduite de transport (8) pour transporter pneumatiquement un flux fluidisé de matériau d'épandage du matériau d'épandage dosé par l'organe de dosage (5) en direction de respectivement un organe d'épandage ;
- respectivement un coude (15) disposé à l'extrémité d'une conduite de transport (8) respective, laquelle extrémité est opposée à la chambre de transfert (7), et destiné à acheminer le flux fluidisé de matériau d'épandage vers l'organe d'épandage respectif ; et
- respectivement un organe d'épandage disposé à l'extrémité libre d'un coude (15) respectif d'une conduite de transport (8) respective, avec un certain espacement latéral par rapport à l'axe longitudinal de la machine d'épandage,
dans laquelle une conduite de transport (8) respective présente, dans la zone de son extrémité tournée vers un coude (15) respectif, au niveau d'une section périphérique intérieure côté fond, au moins un premier dispositif de déviation (40) qui est conçu pour dévier vers le haut le flux fluidisé de matériau d'épandage à partir de la section périphérique intérieure côté fond, **caractérisée en ce qu'**une conduite de transport (8) respective présente au moins un second dispositif de déviation (50) qui comprend une pluralité de saillies périphériques intérieures (51) s'étendant autour de la section périphérique intérieure côté fond de la conduite de transport (8) avec un espacement périphérique les unes des autres.

2. Machine d'épandage selon la revendication 1, **caractérisée en ce que** les saillies périphériques intérieures (51) du second dispositif de déviation (50) présentent
- un espacement périphérique compris entre 3° et 40°, en particulier entre 4° et 32°, et/ou
- une extension radiale comprise entre 0,5 mm et 5 mm, en particulier entre 1 mm et 3 mm, et/ou
- une extension axiale comprise entre 1 mm et 15 mm, en particulier entre 2 mm et 10 mm.

3. Machine d'épandage selon la revendication 1 ou 2,
**caractérisée en ce que** les saillies périphériques intérieures (51) du second dispositif de déviation (50) présentent une section transversale sensiblement en forme de coupe circulaire ou elliptique.

4. Machine d'épandage selon l'une des revendications 1 à 3,
**caractérisée en ce que** les premier et second dispositifs de déviation (40, 50) s'étendent sur une section périphérique intérieure côté fond de la conduite de transport (8)
- d'au moins 90°, en particulier d'au moins 120°, de préférence d'au moins 150°, et/ou
- ne dépassant pas 200°, en particulier ne dépassant pas 190°, de préférence ne dépassant pas 180°.

5. Machine d'épandage selon l'une des revendications 1 à 4,
**caractérisée en ce qu'**une conduite de transport (8) respective présente le premier dispositif de déviation (40) sous la forme d'un rétrécissement de section transversale intérieure (41).

6. Machine d'épandage selon la revendication 5, **caractérisée en ce que** le rétrécissement de section transversale intérieure (41) du premier dispositif de déviation (40) présente une section pouvant être différenciée en continu**,** à la manière d'une rampe s'étendant sur une partie de la périphérie, ou est sensiblement entièrement constitué d'une telle section.

7. Machine d'épandage selon la revendication 5 ou 6,
**caractérisée en ce que** le rétrécissement de section transversale intérieure (41) du premier dispositif de déviation (40) présente une section réalisée de manière à être complémentaire d'une coupe tronconique ou est constitué sensiblement entièrement d'une telle section, dans laquelle le rétrécissement de section transversale intérieure (41) du premier dispositif de déviation (40)
- s'étend en particulier sur une longueur axiale de la conduite de transport (8) comprise entre 5 mm et 100 mm, en particulier entre 10 mm et 75 mm, et/ou
- présente en particulier un angle d'inclinaison compris entre 3° et 25°, en particulier entre 4° et 20°, par rapport à la direction d'extension axiale de la conduite de transport (8).

8. Machine d'épandage selon l'une des revendications 1 à 7,
**caractérisée en ce que** les saillies périphériques intérieures (51) du second dispositif de déviation (50) sont disposées en particulier à l'extrémité du rétrécissement de section transversale intérieure (41) tournée vers le coude (15) du premier dispositif de déviation (40).

9. Machine d'épandage selon l'une des revendications 1 à 8,
**caractérisée en ce que** les premier et second dispositifs de déviation (40, 50) sont disposés sur une section pour conduite de transport (8a) séparée, laquelle peut être fixée, d'une part, à l'extrémité d'une conduite de transport (8) respective tournée vers un coude (15) respectif, d'autre part, à l'extrémité d'un coude (15) respectif tournée vers une conduite de transport (8) respective.

10. Machine d'épandage selon la revendication 9, **caractérisée en ce que** la section pour conduite de transport (8a) séparée peut être fixée**,** à la manière d'un raccord enfichable, à l'extrémité d'une conduite de transport (8) respective tournée vers le coude (15) et/ou à l'extrémité d'un coude (15) respectif tournée vers une conduite de transport (8) respective, dans laquelle la section pour conduite de transport (8a) séparée présente en particulier, sur son côté des premier et second dispositifs de déviation (40, 50) opposé au coude (15), une réduction de section transversale intérieure (60) en forme de gradins qui sert de butée frontale à la conduite de transport (8) enfichée dans la section pour conduite de transport (8a) séparée.

11. Machine d'épandage selon l'une des revendications 1 à 10, **caractérisée en ce**
- **qu'**une conduite de transport (8) respective et, le cas échéant, la section pour conduite de transport (8a) séparée présentent une forme sensiblement ronde, en particulier sensiblement circulaire, et/ou
- **qu'**un coude (15) respectif présente une section transversale intérieure sensiblement rectangulaire.

12. Machine d'épandage selon l'une des revendications 1 à 11, **caractérisée en ce qu'**au moins un dispositif de séparation (70) est disposé dans le coude (15), lequel dispositif de séparation divise la section transversale intérieure du coude (15) en une section de section transversale intérieure côté fond et en une section de section transversale intérieure côté supérieur, dans laquelle le dispositif de séparation (70) est en particulier disposé sensiblement à l'horizontale.

13. Machine d'épandage selon la revendication 12, **caractérisée en ce que** le dispositif de séparation (70) du coude (15)
- est disposé avec un certain espacement par rapport à l'extrémité du coude (15) tournée vers la conduite de transport (8) et/ou
- s'étend sensiblement jusqu'à l'extrémité libre du coude (15).

14. Machine d'épandage selon l'une des revendications 1 à 13, **caractérisée en ce que** l'organe d'épandage disposé à l'extrémité libre d'un coude (15) respectif d'une conduite de transport (8) respective est un corps d'impact (16)**,** pouvant en particulier être monté de manière réglable.
